# EUROPÄISCHE PATENTANMELDUNG

(11) **EP 1 211 796 A1**
(43) Veröffentlichungstag der Anmeldung: **05.06.2002**
(21) Anmeldenummer: 01126636.8
(22) Anmeldetag: 08.11.2001
(51) Int. Cl.: H02P 1/54, B60J 7/057, B60N 2/02, H02P 7/68

(54) **Schaltungsanordnung zur Stromversorgung von mehreren umsteuerbaren elektrischen Stellantrieben**

(30) Priorität: 24.11.2000 DE 10058549
(71) Anmelder: Webasto Vehicle Systems International GmbH, 82131 Stockdorf (DE)
(72) Erfinder: Schober, Stefan, 82362 Weilheim (DE); Lutzenberger, Walter, 82343 Pöcking (DE)
(74) Vertreter: Wiese, Gerhard

(57) **Zusammenfassung**

Eine Schaltungsanordnung zur Stromversorgung von mindestens drei elektrischen Stellmotoren (24, 26, 28) mit jeweils einem ersten Anschluss und einem zweiten Anschluss, bei welchen es sich insbesondere um Stellmotoren eines öffnungsfähigen Fahrzeugdaches handelt, ist versehen mit einer Spannungsquelle (38) mit einem ersten Pol und einem zweiten Pol und vier unabhängig ansteuerbaren Wechslerkontakten (30, 32, 34, 36), mittels welchen sich drei der elektrischen Stellmotoren einzeln an- und umsteuern lassen, wobei jedem Anschluss eines ersten Stellmotors (26) und jedem Anschluss eines zweiten Stellmotors (28) je ein Wechslerkontakt (34, 36; 30, 32) zum Verbinden an den ersten Pol oder an den zweiten Pol zugeordnet ist und wobei ein erster Anschluss des ersten Stellmotors (26) mit einem ersten Anschluss eines dritten Stellmotors (24) und ein zweiter Anschluss des zweiten Stellmotors (28) mit einem zweiten Anschluss des dritten Stellmotors (24) verbunden ist.

## Beschreibung

Die vorliegende Erfindung betrifft eine Schaltungsanordnung zur Stromversorgung von mehreren umsteuerbaren elektrischen Stellmotoren, bei welchen es sich insbesondere um Stellmotoren eines öffnungsfähigen Fahrzeugdaches handelt, versehen mit einer Stromquelle und einer Schaltanordnung zum Betätigen der Stellmotoren.

Schaltungsanordnungen der eingangs genannten Art finden sich beispielsweise in Kraftfahrzeugen zum Ansteuern mehrerer elektrischer Stellmotoren zum Verstellen eines öffnungsfähigen Fahrzeugsdaches oder zum Einstellen der Position einer der Fahrzeugsitze. Da hierbei oftmals mehrere bewegliche Teile entlang unterschiedlicher Verstellwege verstellt werden müssen, sind in solchen Fällen zwei oder mehr elektrische Stellmotoren vorgesehen, beispielweise um einen Deckel sowie einen Windabweiser eines Fahrzeugdaches einzeln zu verfahren oder aber um einen Fahrzeugsitz hinsichtlich seiner Position in Fahrzeuglängsrichtung, seiner Höhe, seiner Sitzflächenneigung sowie der Neigung seiner Lehne zu verstellen.

Da dafür gesorgt sein muss, dass derartige Stellmotoren einzeln angesteuert werden können, wobei für jeden Stellmotor eine Schaltposition für LINKSLAUF, RECHTSLAUF und Aus realisiert sein muss, wurde bei bekannten Schaltungsanordnungen der eingangs genannten Art vorgeschlagen, für jeden der Stellmotoren eine Schaltanordnung vorzusehen, die zwei unabhängig ansteuerbare Wechslerkontakte aufweist, um die genannten Schaltzustände zu verwirklichen.

Eine derartige Schaltungsanordnung ist in DE 197 06 297 A1 offenbart, in der eine Steuervorrichtung für einen Fahrzeugsitz beschrieben ist. Zum Verstellen der Position in Fahrzeuglängsrichtung, der Höhenlage und der Neigung der Lehne des Fahrzeugsitzes sind hierbei drei Stellmotoren vorgesehen, die über jeweils zwei unabhängig ansteuerbare Wechslerkontakte unabhängig voneinander in beiden Motordrehrichtungen betätigt werden können.

Handelt es sich bei den Stellmotoren um drehzahlvariable Stellmotoren, so weist die Ansteuerung eines jedem der Stellmotoren zusätzlich zu der genannten Schaltanordnung eine Pulsbreitenmodulationsanordnung auf.

Ferner ist aus JP 11332290 A eine Schaltungsanordnung zur Stromversorgung von vier umsteuerbaren elektrischen Stellmotoren bekannt, wobei die Schaltungsanordnung eine Stromquelle und eine Schaltanordnung zum Betätigen der Stellantriebe aufweist, wobei die Schaltanordnung vier unabhängig ansteuerbare Wechslerkontakte aufweist, mittels welchen sich die elektrischen Stellantriebe einzeln an- und umsteuern lassen.

In JP 62-85695 wird eine Motorsteuerschaltung für eine Kamera vorgeschlagen, bei der drei umsteuerbare elektrische Stellmotoren mittels aus Transistoren aufgebauten Brückenschaltungen angesteuert werden können, die einen gleichzeitigen Betrieb der Motoren verhindern. Um die Zahl der eingesetzten Transistoren zu reduzieren, wird vorgeschlagen, dass sich die jeweils zwei Motoren die Transistoren einer Brücke teilen.

Die DE 44 29 998 A1 beschreibt eine Anordnung zur Positionssteuerung von Elektromotoren, wie sie zum Ansteuern elektrisch verstellbarer Kraftfahrzeugsitze eingesetzt werden. Um den Schaltungsaufwand zu reduzieren, wird vorgeschlagen, für die Motoren eine gemeinsame Drehwinkelüberwachungsschaltung vorzusehen. Zum geregelten Ansteuern der Elektromotoren kann eine Pulsbreitenmodulationsanordnung vorgesehen sein.

Aus der DE 38 29 405 C2 ist ferner eine Betätigungseinrichtung für elektromotorisch bewegte Teile von Kraftfahrzeugen bekannt, bei welcher die Drehrichtung eines Stellmotors durch zwei Relais sowie deren Umschaltkontakte gesteuert wird.

Es ist eine Aufgabe der vorliegenden Erfindung, eine Schaltungsanordnung der eingangs genannten Art zu schaffen, die einfacher aufgebaut und daher kostengünstiger herzustellen ist als bisher bekannte Schaltungsanordnungen zur Stromversorgung von mindestens drei umsteuerbaren elektrischen Stellmotoren.

Diese Aufgabe wird dadurch gelöst, dass eine Schaltungsanordnung zur Stromversorgung von mindestens drei elektrischen Stellmotoren mit jeweils einem ersten Anschluss und einem zweiten Anschluss, bei welchen es sich insbesondere um Stellmotoren eines öffnungsfähigen Fahrzeugdaches handelt, mit einer Spannungsquelle mit einem ersten Pol und einem zweiten Pol und vier unabhängig ansteuerbaren Wechslerkontakten versehen ist, mittels welchen sich drei der elektrischen Stellmotoren einzeln an- und umsteuern lassen, wobei jedem Anschluss eines ersten Stellmotors und jedem Anschluss eines zweiten Stellmotors je ein Wechslerkontakt zum Verbinden an den ersten Pol oder an den zweiten Pol zugeordnet ist und wobei ein erster Anschluss des ersten Stellmotors mit einem ersten Anschluss eines dritten Stellmotors und ein zweiter Anschluss des zweiten Stellmotors mit einem zweiten Anschluss des dritten Stellmotors verbunden ist.

Indem sich die Stellmotoren somit die Wechslerkontakte "teilen", anstatt für jeden Stellmotor ein eigenes Paar von Wechslerkontakten bereitzustellen, wird auf diese Weise die Zahl der zur individuellen An- und Umsteuerung benötigten Bauteile vermindert.

Die hier vorgeschlagene Schaltungsanordnung eignet sich neben der bereits angedeuteten Verwendung zum Verstellen eines Fahrzeugsitzes insbesondere zum Einsatz bei öffnungsfähigen Fahrzeugdächern mit mindestens einer in einer festen Dachfläche vorgesehenen Dachöffnung und mindestens zwei elektrisch angetriebenen Deckelelementen zum Verschließen und teilweisen Freigeben der mindestens einen Dachöffnung. Hierbei können die elektrischen Stellmotoren zum Verstellen der Deckelelemente aber auch zum Verstellen eines Windabweisers angeschlossen sein.

Als Beispiele für Fahrzeugdächer, bei welchen mehrere unabhängig ansteuerbare Stellmotoren vorzusehen sind, sind insbesondere Mehrdeckeldächer mit mehreren unabhängig verfahrbaren Deckelelementen oder aber Lamellendächer zu nennen, welche sich wahlweise ausgehend vom vorderen oder vom hinteren Rand einer Dachöffnung aus öffnen lassen. Ferner eignet sich das vorliegend beschriebene Konzept auch für solche Lamellendächer, bei welchen ein Stellmotor zum Verschieben der Lamellen in Fahrzeuglängsrichtung vorgesehen ist und ein weiterer Stellmotor zum Ausstellen mindestens einer der Lamellen vorgesehen ist. Darüber hinaus können bei allen der genannten Dächer zusätzlich unabhängig verfahrbare Windabweiser vorgesehen sein.

Ein bevorzugtes Ausführungsbeispiel der Erfindung ist im folgenden unter Bezugnahme auf die beiliegenden Zeichnungen im Detail beschrieben. Es zeigen:
- FIG. 1: eine schematische Schnittansicht eines Fahrzeugdaches mit drei unabhängig voneinander verfahrbaren Deckelelementen; und
- FIG. 2: ein Schaltschema einer Schaltungsanordnung gemäß der vorliegenden Erfindung.

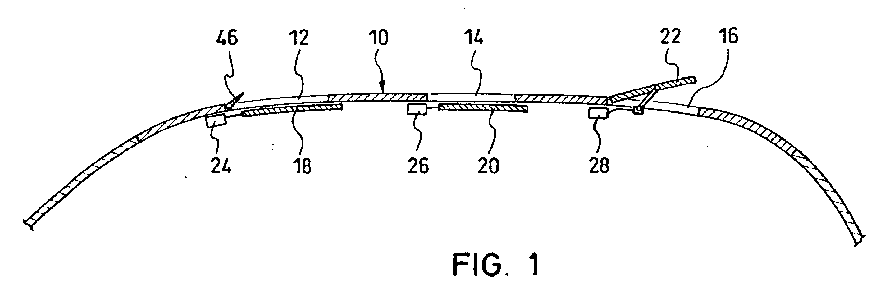

Bei dem in FIG. 1 schematisch dargestellten Fahrzeugdach sind in einer festen Dachfläche 10 drei Dachöffnungen 12, 14 und 16 vorgesehen, die mittels unabhängig voneinander verfahrbaren Deckelelementen 18, 20 bzw. 22 wahlweise verschlossen oder mindestens teilweisen freigegeben werden können. In der vorderen Dachöffnung 12 ist ferner ein Windabweiser 46 angedeutet, der mittels eines eigenen Stellmotors (nicht gezeugt) angetrieben werden kann. Zum Verfahren der einzelnen Deckelelemente 18, 20 und 22 ist jeweils ein umsteuerbarer elektrischer Stellmotor 24, 26 bzw. 28 vorgesehen, die über eine nicht näher dargestellte Mechanik für ein Verfahren der Deckelelemente 18, 20 und 22 wahlweise in Öffnungs- oder in Schließrichtung sorgen. In dem in FIG. 1 gezeigten Beispiel sind das vordere Deckelelement 18 und das mittlere Deckelelement 20 als in Fahrzeuglängsrichtung verschiebbare Elemente ausgelegt, während das hintere Deckelelement 22 als über die feste Dachfläche 10 ausstellbares Element ausgelegt ist.

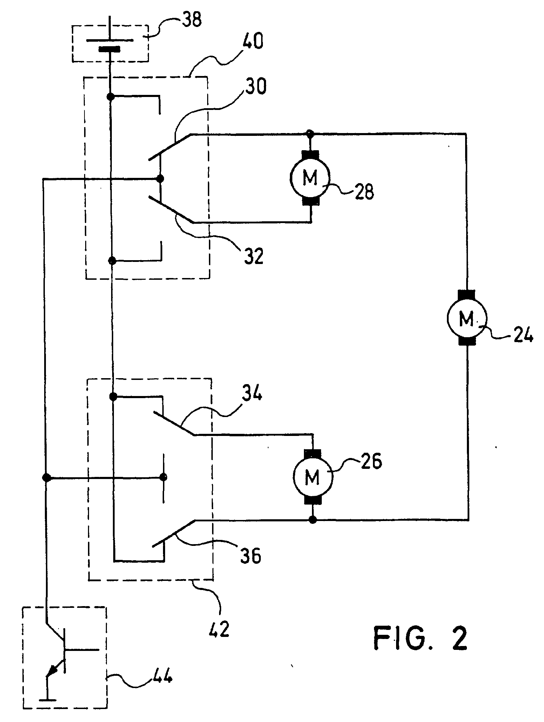

Zum unabhängigen Ansteuern der Deckelelemente 18, 20 und 22 ist eine Schaltungsanordnung vorgesehen, wie sie in FIG. 2 dargestellt ist. Hierbei sind die drei elektrischen Stellmotoren 24, 26 und 28 über eine Schaltanordnung, die vier unabhängig ansteuerbare Wechslerkontakte 30, 32, 34 und 36 sowie eine nicht dargestellte Betätigungsanordnung zum Schalten der Wechslerkontakte 30, 32, 34 und 36 umfasst, mit der Stromversorgung 38 des Fahrzeugs verbunden. Wie in FIG. 2 dargestellt ist, können die Wechslerkontakte 30, 32, 34 und 36 paarweise in einem Relais 40 bzw. 42 zusammengefasst sein. Sind die elektrischen Stellmotoren 24, 26 und 28 als drehzahlvariable Antriebe ausgelegt, so ist vorzugsweise eine einzelne Pulsbreitenmodulationsanordnung 44 vorgesehen, die von allen drei Stellmotoren 24, 26 und 28 gemeinsam genutzt wird. Vorzugsweise umfasst die Pulsbreitenmodulationsanordnung 44 einen Halbleiter-Leistungsschalter.

Die Wechslerkontakte 30, 32, 34 und 36 lassen sich einzeln und unabhängig voneinander jeweils in eine obere und eine untere Stellung bringen. Die möglichen Schaltzustände der in FIG. 2 gezeigten Schaltungsanordnung sind in der nachstehenden Tabelle zusammengefasst.

| Schaltzustände der Schaltungsanordnung gemäß FIG. 2 | | | | | | | |
|---|---|---|---|---|---|---|---|
| Nr. | Kontakt 30 | Kontakt 32 | Kontakt 34 | Kontakt 36 | Motor 24 | Motor 26 | Motor 28 |
| 1 | unten | oben | oben | unten | R | - | - |
| 2 | oben | unten | unten | oben | L | - | - |
| 3 | oben | unten | unten | unten | - | R | - |
| 4 | unten | oben | oben | oben | - | L | - |
| 5 | unten | unten | unten | oben | - | - | R |
| 6 | oben | oben | oben | unten | - | - | L |
| 7 | unten | oben | unten | unten | R | R | - |
| 8 | oben | unten | oben | oben | L | L | - |
| 9 | unten | unten | oben | unten | R | - | R |
| 10 | oben | oben | unten | oben | L | - | L |
| 11 | unten | unten | unten | unten | R | R | R |
| 12 | oben | oben | oben | oben | L | L | L |
| 13 | oben | unten | oben | unten | - | - | - |
| 14 | unten | oben | unten | oben | - | - | - |
| 15 | oben | oben | unten | unten | - | R | L |
| 16 | unten | unten | oben | oben | - | L | R |
| R: RECHTSLAUF L: LINKSLAUF -: AUS | | | | | | | |

Befinden sich die Wechslerkontakte 30, 32, 34 und 36 in den in der Tabelle als Schaltzustand Nr. 1 bezeichneten Stellungen, wobei dies der in FIG. 2 dargestellte Schaltzustand der Schaltanordnung ist, so fließt ein Strom vom positiven Pol der Fahrzeugbatterie 38 über den Kontakt 36 durch den Motor 24 und über den Kontakt 30 zum Masseanschluss, der in FIG. 2 innerhalb der Pulsbreitenmodulationsanordnung 44 angedeutet ist. In der Tabelle ist dieser Betrieb des Motors 24 als RECHTSLAUF (R) bezeichnet. Da im Schaltzustand Nr. 1 beide Kontakte des Motors 26 mit dem positiven Pol der Fahrzeugbatterie 38 verbunden sind während beide Kontakte des Motors 28 über die Pulsbreitenmodulationsanordnung 44 mit Masse verbunden sind, werden die Motoren 26 und 28 im Schaltzustand Nr.1 nicht betrieben (Aus).

Werden hingegen die Wechslerkontakte 30, 32, 34 und 36 in die in der Tabelle als Schaltzustand Nr. 2 bezeichneten Stellungen verstellt, so fließt ein Strom vom positiven Pol der Fahrzeugbatterie 38 über den Kontakt 30 durch den Motor 24 und über den Kontakt 36 zum Masseanschluss. Dieser Betrieb des Motors 24 ist in der Tabelle als LINKSLAUF (L) bezeichnet. Auch im Schaltzustand Nr. 2 werden die Motoren 26 und 28 nicht betrieben, d.h. sind Aus, da beide Kontakte des Motors 26 mit Masse verbunden sind während beide Kontakte des Motors 28 mit dem positiven Pol der Fahrzeugbatterie 38 verbunden sind.

Wie aus der obigen Tabelle ersichtlich ist, lassen sich bei der vorliegend erläuterten Schaltungsanordnung die Motoren 24, 26 und 28 nicht nur alle einzeln jeweils im RECHTSLAUF und im LINKSLAUF betreiben (Schaltzustände 1 bis 6), sondern können auch mehrere Motoren gezielt gleichzeitig angesteuert werden. Insbesondere lassen sich mittels der Schaltzustände 7 und 8 das vordere und das mittlere Deckelelement, mittels der Schaltzustände 9 und 10 das vordere und das hintere Deckelelement gleichzeitig öffnen bzw. schließen. Über die Schaltzustände 11 und 12 ist ferner ein gleichzeitiges Öffnen bzw. Schließen aller Deckelelemente möglich, was beispielsweise bei einem Mehrdeckeldach als Schnellschließung genutzt werden kann. In den Schaltzuständen 13 und 14 sind alle Motoren AUS, in den Schaltzuständen 15 und 16 werden die Motoren 26 und 28 gegenläufig betrieben.

Es versteht sich, dass die (in den Figuren nicht dargestellte) Betätigungsanordnung zum Schalten der Wechslerkontakte 30, 32, 34 und 36 nicht alle der in der Tabelle angegebenen Schaltzustände realisieren können muss. Falls beispielsweise ein rein sequentieller Betrieb der Motoren 24, 26 und 28 gemäß der Anordnung nach FIG. 2 angestrebt wird, könnte die Betätigungsanordnung zum Schalten der Wechslerkontakte 30, 32, 34 und 36 so ausgelegt sein, dass sie die Schaltzustände 1 bis 6 und 13 hervorrufen kann, während auf die übrigen der in Tabelle angegebenen Schaltzustände verzichtet wird.

### Bezugszeichenliste

- 10: feste Dachfläche
- 12, 14, 16: Dachöffnungen
- 18, 20, 22: Deckelelemente
- 24, 26, 28: elektrische Stellmotoren
- 30, 32, 34, 36: Wechslerkontakte
- 38: Fahrzeugbatterie
- 40, 42: Relais
- 44: Pulsbreitenmodulationsanordnung
- 46: Windabweiser

## Patentansprüche

1. Schaltungsanordnung zur Stromversorgung von mindestens drei elektrischen Stellmotoren (24, 26, 28) mit jeweils einem ersten Anschluss und einem zweiten Anschluss, bei welchen es sich insbesondere um Stellmotoren eines öffnungsfähigen Fahrzeugdaches handelt, versehen mit einer Spannungsquelle (38) mit einem ersten Pol und einem zweiten Pol und vier unabhängig ansteuerbaren Wechslerkontakten (30, 32, 34, 36), mittels welchen sich drei der elektrischen Stellmotoren einzeln an- und umsteuern lassen, wobei jedem Anschluss eines ersten Stellmotors (26) und jedem Anschluss eines zweiten Stellmotors (28) je ein Wechslerkontakt (34, 36; 30, 32) zum Verbinden an den ersten Pol oder an den zweiten Pol zugeordnet ist und wobei ein erster Anschluss des ersten Stellmotors (26) mit einem ersten Anschluss eines dritten Stellmotors (24) und ein zweiter Anschluss des zweiten Stellmotors (28) mit einem zweiten Anschluss des dritten Stellmotors (24) verbunden ist.

2. Schaltungsanordnung nach Anspruch 1, **dadurch gekennzeichnet, dass** mindestens zwei der Wechslerkontakte (30, 32, 34, 36) in einem Relais (40, 42) zusammengefasst sind.

3. Schaltungsanordnung nach einem der Ansprüche 1 oder 2, wobei mindestens zwei elektrische Stellmotoren (26, 28) drehzahlvariabel sind und eine Pulsbreitenmodulationsanordnung (44) zum drehzahlvariablen Ansteuern der mindestens zwei elektrischen Stellmotoren vorgesehen ist.

4. Schaltungsanordnung nach Anspruch 3, **dadurch gekennzeichnet, dass** die Pulsbreitenmodulationsanordnung (44) einen Halbleiter-Leistungsschalter aufweist.

5. Öffnungsfähiges Fahrzeugdach mit mindestens einer in einer festen Dachfläche (10) vorgesehenen Dachöffnung (12, 14, 16) und mindestens zwei elektrisch angetriebenen Deckelelementen (18, 20, 22) zum Verschließen und teilweisen Freigeben der mindestens einen Dachöffnung, wobei die Schaltungsanordnung nach einem der vorhergehenden Ansprüche vorgesehen ist, bei welcher die elektrischen Stellmotoren (24, 26, 28) zum Verstellen der Deckelelemente (18, 20, 22) angeschlossen sind.

6. Fahrzeugdach nach Anspruch 5, wobei ein Windabweiser (46) vorgesehen ist, der mittels einem der elektrischen Stellmotoren (24, 26, 28) wahlweise mindestens teilweise ausgestellt oder in eine Ruheposition verbracht werden kann.

7. Fahrzeugdach nach Anspruch 5 oder 6, wobei die Deckelelemente Teil eines Lamellendaches sind.

8. Fahrzeugdach nach Anspruch 5 oder 6, wobei die Deckelelemente Teil eines Faltdaches sind.

9. Fahrzeugdach nach Anspruch 5 bis 8, wobei die elektrischen Stellmotoren zum Antreiben schwenk- und/oder verschiebbarer Seitenholme verwendet werden.
